# EUROPEAN PATENT APPLICATION

(11) **EP 4 827 154 A1**
(43) Date of publication of application: **21.10.2026**
(21) Application number: 23961185.8
(22) Date of filing: 15.12.2023
(51) Int. Cl.: H04W 24/04

(54) **MOBILITY MANAGEMENT METHOD AND APPARATUS**

(71) Applicant: 1FINITY INC., Kawasaki-shi, Kanagawa 211-8588 (JP)
(72) Inventor: GENG, Tingting, Beijing 100022 (CN); JIA, Meiyi, Beijing 100022 (CN)
(74) Representative: Haseltine Lake Kempner LLP
(86) International application number: PCT/CN2023/139125
(87) International publication number: WO 2025/123327

(57) **Abstract**

Embodiments of the present disclosure provide a method and an apparatus for mobility management, the method comprising that: a terminal equipment receives configuration information for configuring an L1/L2 triggered mobility (LTM) candidate cell, transmitted by a first network device; the terminal equipment determines that an LTM connection failure occurs; and the terminal equipment records connection failure information, the connection failure information including at least one of the following: information for indicating a time duration from when the terminal equipment receives the configuration information for the last time to occurrence of the connection failure; or information for determining that a mobility type related to the connection failure is LTM. According to embodiments of the present disclosure, a SON enhancement scheme in an LTM scenario is introduced, thereby a terminal equipment may report connection failure information related to LTM, so that a network device may perform corresponding parameter adjustments according to the connection failure information, thus improving LTM robustness.

## Description

### TECHNICAL FIELD

Embodiments of the present disclosure relate to the technical field of communications.

### BACKGROUND

Mobility scenarios in radio communication systems include lower layer triggered mobility (also called L1/L2 triggered mobility (LTM)) scenarios. In LTM, a network device transmits configuration information of an LTM candidate cell to a terminal equipment, and the terminal equipment performs downlink and/or uplink synchronization procedures with an LTM candidate cell. The terminal equipment performs L1 measurement and transmits an L1 measurement result corresponding to the LTM candidate cell to the network device. The network device determines an LTM target cell of LTM cell switch for the terminal equipment according to the L1 measurement result, and transmits the LTM target cell of LTM cell switch to the terminal equipment via L2 signaling. Correspondingly, the terminal equipment performs an LTM cell switch procedure to the LTM target cell.

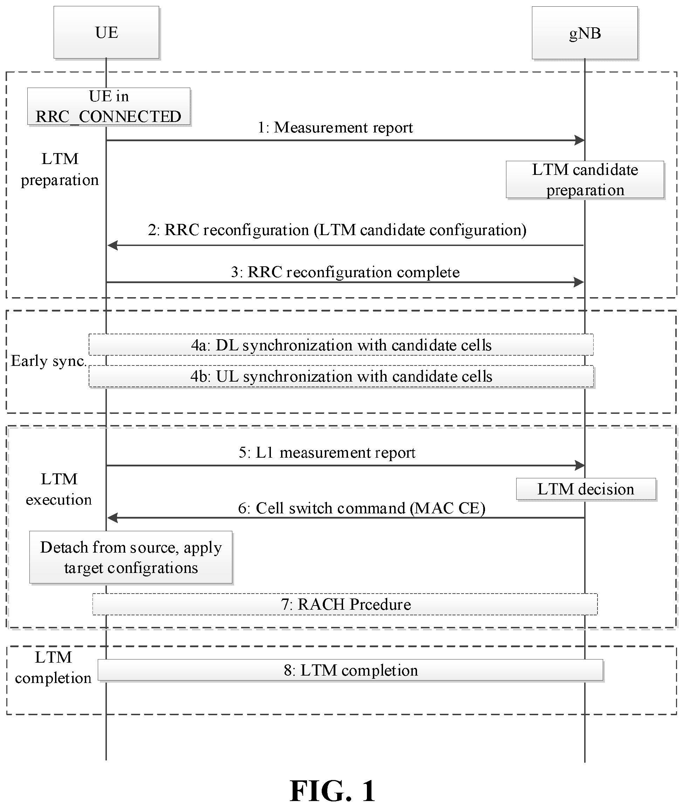

FIG. 1 is a schematic diagram of a possible LTM procedure. As shown in FIG. 1, the procedure may include the following steps:
Step 1: a User Equipment (UE) transmits a measurement report (*MeasurementReport*) to a base station (gNB);
Step 2: the UE receives configuration information of one or more LTM candidate cells transmitted by the base station;
Step 3: the UE stores received configuration information of LTM candidate cell(s) and transmits a response message to the base station;
Step 4a: the UE performs downlink synchronization with LTM candidate cell(s);
Step 4b (optional): the UE performs uplink synchronization with corresponding LTM candidate cell(s) according to the configuration information from the base station;
Step 5: the UE performs L1 measurement and transmits an L1 measurement result to the base station;
Step 6: the UE receives a Media Access Control Control Element (MAC CE) for indicating a cell switch command, transmitted by the base station, the MAC CE including indication information of an LTM target cell;
In step 6, optionally, the MAC CE may include Timing Advance (TA) information of the LTM target cell;
Step 7 (optional): if the UE does not possess a valid TA corresponding to the LTM target cell, the UE performs a random access procedure with the LTM target cell when performing the LTM cell switch procedure with the LTM target cell; and
Step 8: the UE completes the LTM cell switch procedure with the LTM target cell.

In the above process, if step 7 is performed, when the UE successfully completes the random access procedure with the LTM target cell, it may be considered that the UE has successfully completed the LTM cell switch procedure.

In the above process, if step 7 is not performed, when the UE determines that a network device to which the LTM target cell belongs successfully receives the first uplink data transmitted by the UE, it may be considered that the UE has successfully completed the LTM cell switch procedure. For example, when the UE, in the LTM target cell, receives a Physical Downlink Control Channel (PDCCH) addressed with a UE's Cell Radio-Network Temporary Identifier (C-RNTI), the PDCCH being used to schedule new data transmission, the UE considers that the network device has successfully received the first uplink data transmitted by the UE.

It should be noted that the above introduction to the technical background is just to facilitate a clear and complete description of technical solutions of the present disclosure, and is elaborated to facilitate understanding of persons skilled in the art. It cannot be considered that the technical solutions are known by persons skilled in the art just because these solutions are elaborated in Background of the present disclosure.

### SUMMARY

Inventors find that during LTM, if a connection failure occurs, it is necessary to consider optimizing LTM-related configurations for subsequent mobility management. The connection failure includes failure types such as a radio link failure (RLF), a handover failure (HOF), or a connection failure between a terminal equipment and a current serving cell caused by timer expiry or other reasons.

Currently, self-organization networks (SON) introduce network optimization-related mechanisms, including a mobility robustness optimization (MRO) mechanism. In existing MRO mechanisms, by recording parameters during a mobility procedure, generating a corresponding mobility report, and reporting to a network device, by a terminal equipment, so that the network device may better adjust mobility-related parameters.

The mobility report may include at least one of the following reports: a failure report, a successful mobility report, a random access report (RA report), a connection establishment failure report (CEF report), or other reports. The failure report includes any one or more of a radio link failure report (RLF report) or other failure reports, and the successful mobility report includes various successful mobility reports, such as a successful handover report, a successful secondary cell addition or switch report, or any one or more of other successful reports.

However, in existing SON mechanisms, there are no LTM-related optimization operations. Therefore, it is necessary to consider recording failure information related to LTM mobility to assist the network device in optimizing corresponding configuration parameters.

For at least one of the above problems or other similar problems, embodiments of the present disclosure provide a method and an apparatus for mobility management.

According to an aspect of embodiments of the present disclosure, a method for mobility management is provided, wherein the method includes that,
a terminal equipment receives configuration information for configuring an L1/L2 triggered mobility (LTM) candidate cell, transmitted by a first network device;
the terminal equipment determines that an LTM connection failure occurs; and
the terminal equipment records connection failure information, the connection failure information including at least one of the following:
   information for indicating a time duration from when the terminal equipment receives the configuration information for the last time to occurrence of the connection failure; or
   information for determining that a mobility type related to the connection failure is LTM.

According to another aspect of embodiments of the present disclosure, an apparatus for mobility management is provided, configured in a terminal equipment, wherein the apparatus includes:
a receiving unit configured to receive configuration information for configuring an L1/L2 triggered mobility (LTM) candidate cell, transmitted by a first network device;
a determining unit configured to determine that an LTM connection failure occurs; and
a processing unit configured to record connection failure information, the connection failure information including at least one of the following:
   information for indicating a time duration from when the terminal equipment receives the configuration information for the last time to occurrence of the connection failure; or
   information for determining that a mobility type related to the connection failure is LTM.

One of advantageous effects of embodiments of the present disclosure lies in that according to embodiments of the present disclosure, a SON enhancement scheme in an LTM scenario is introduced, thereby a UE may report failure information related to LTM, so that a network device may perform corresponding parameter adjustments according to the failure information related to LTM, thus improving LTM robustness.

Referring to later descriptions and drawings, specific implementations of the present disclosure are disclosed in detail, indicating modes in which principles of the present disclosure may be adopted. It should be understood that implementations of the present disclosure are not limited in scope thereby. Within spirits and scopes of terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.
FIG. 1 is a schematic diagram of an LTM procedure;
FIG. 2 is a schematic diagram of a forwarding process of an RLF report between a terminal equipment and a network device;
FIG. 3 is a schematic diagram of a method for mobility management in embodiments of a first aspect of the present disclosure;
FIG. 4 is a schematic diagram of a time point at which a connection failure occurs between a terminal equipment and a serving cell;
FIG. 5 is a schematic diagram of a time point at which a connection failure occurs between a terminal equipment and an LTM target cell;
FIG. 6 is a schematic diagram of an information interaction process between a terminal equipment and a network device in a scenario shown in FIG. 4;
FIG. 7 is a schematic diagram of an information interaction process between a terminal equipment and a network device in a scenario shown in FIG. 5;
FIG. 8 is a schematic diagram of a method for mobility management in embodiments of a second aspect of the present disclosure;
FIG. 9 is a schematic diagram of an apparatus for mobility management in embodiments of the present disclosure;
FIG. 10 is another schematic diagram of an apparatus for mobility management in embodiments of the present disclosure;
FIG. 11 is a schematic diagram of a communication system in embodiments of the present disclosure;
FIG. 12 is a schematic diagram of a network device in embodiments of the present disclosure;
FIG. 13 is a schematic diagram of a terminal equipment in embodiments of the present disclosure.

### DETAILED DESCRIPTION

Referring to the drawings, through the following Specification, the aforementioned and other features in the present disclosure will become obvious. Specification and the drawings specifically disclose specific implementations of the present disclosure, indicating partial implementations in which principles of the present disclosure may be adopted. It should be understood that the present disclosure is not limited to described implementations, on the contrary, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of terms listed in an associated manner. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, a scenario containing a network device and/or a terminal equipment is taken as an example.

In the above scenario, the network device may include at least one of a core network device, a third-party application device, an operation administration and maintenance (OAM) device, or an access network device.

The core network device may refer to a device in a core network (CN) that provides service support for terminal equipments. As some instances, the core network device may be at least one of the following: a mobility and management entity (MME), an access and mobility management function (AMF) entity, a session management function (SMF) entity, a user plane function (UPF) entity, a Location Management Function (LMF) entity, etc., which are not exhaustively listed here. The AMF entity may be responsible for access management and mobility management of terminals, the SMF entity may be responsible for session management, such as session establishment of a user, and the UPF entity may be a functional entity of a user plane and is primarily responsible for connecting to external networks. The LMF entity may manage overall coordination and scheduling of resources required for positions of terminal equipments registered with or accessing a core network device. It should be noted that in embodiments of the present disclosure, the entity may also be called a network element or a functional entity. For example, the AMF entity may also be called an AMF network element or an AMF functional entity, and so on.

The third-party application device may be an OTT server (over the top server) or other third-party device.

The OAM device may be a network device that performs management work such as operation, administration, and maintenance, etc. on a network according to actual needs of an operator's network operations.

The access network device is an access device through which a terminal equipment wirelessly accesses a communication system. The access network device may be a base station (BS), an evolved NodeB (eNodeB), a transmission reception point (TRP), a base station (next generation NodeB, gNB) in a 5th generation (5G) mobile communication system, a base station in a 6th generation (6G) mobile communication system, a base station in a future mobile communication system or an access node in a WiFi system, etc. The access network device may further be a module or unit that completes part of functions of a base station, for example, may be at least one of the following modules or units: a central unit (CU), a distributed unit (DU), a central unit control plane (CU-CP), a central unit user plane (CU-UP), an Integrated Access Backhaul (IAB), or other module or unit. Embodiments of the present disclosure do not define specific technologies and/or specific device forms adopted by the access network device. The access network device may be deployed on land, including indoors/outdoors, and may be handheld or vehicle-mounted, or may further be deployed on water surfaces, on planes, balloons, or satellites. The access network device may be deployed in a fixed position or on a mobile carrier. Embodiments of the present disclosure do not define in this regard.

In the above scenarios, the terminal equipment may be a device having a wireless transceiving function, may transmit signals to the access network device and/or receive signals from the access network device. The terminal equipment may also be called a terminal, a mobile station, or a mobile terminal, etc. The terminal equipment may be a mobile phone, a tablet, or other device having a wireless smart transceiving function. The terminal equipment may be widely applied in various scenarios, such as device-to-device (D2D), vehicle-to-everything (V2X) communication, machine-type communication (MTC), Internet of Things (IoT), virtual reality, augmented reality, industrial control, autonomous driving, telemedicine, or various smart scenarios.

In the above scenarios, communication between an access network device and a terminal equipment and communication between a terminal equipment and another terminal equipment may be performed via licensed spectrum, or via license-free spectrum, or via both licensed spectrum and license-free spectrum simultaneously. Embodiments of the present disclosure do not define spectrum resources used for wireless communications.

Description is made below by taking that a connection failure occurs in a current serving cell and a mobility report is an RLF report for a terminal equipment as an example.

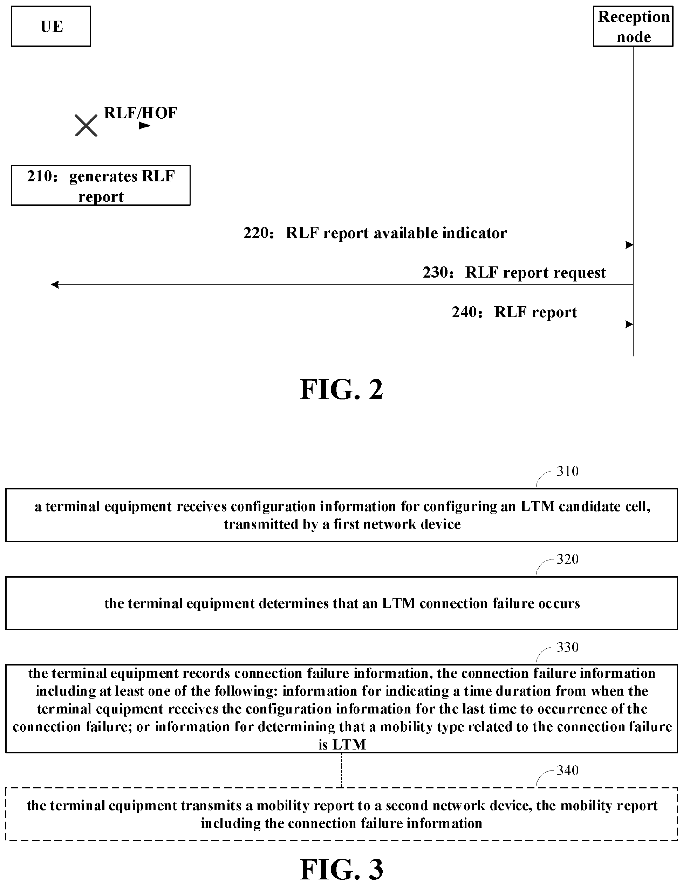

In this example, the terminal equipment may record relevant information into the RLF report, generate and transmit the RLF report. FIG. 2 is a schematic diagram of a forwarding process of an RLF report between a terminal equipment and a network device. As shown in FIG. 2, the forwarding process may include:
210: a terminal equipment detects that a connection failure occurs in a current serving cell, and the terminal equipment generates an RLF report. Exemplarily, the RLF report may include at least one of the following:
   - Information on failed cell: the failed cell is a cell where the terminal equipment detects the connection failure. The information on failed cell may include at least one of the following: a cell global identifier (CGI), a physical cell identifier (PCI) and frequency point information, a cell identifier (cell ID), a non-public network identifier (NPN ID), a non-terrestrial network identifier (NTN ID), or other cell identifier. The CGI may include a public land mobile network identifier (PLMN ID) and a cell ID. Optionally, the information on failed cell may further include a tracking area code (TAC) and/or identifier information of a network device to which the failed cell belongs, such as a global network device identifier, etc. During a mobility procedure, the failed cell may also be called a target cell.
   - Information on previous serving cell: the previous serving cell is a primary cell (previous primary cell) from which a terminal equipment received a mobility command for a last time. During a mobility procedure, the previous serving cell may also be called a source cell.
   - Failure type information: e.g., RLF, HOF.
   - Information on reestablished cell: the reestablished cell may be a cell where a terminal equipment attempts to initiate a reestablishment procedure after detecting a connection failure.
   - Time information after failure: the time information after failure may be used to indicate a time duration after a terminal equipment detects a connection failure, generally referring to a time duration from when the terminal equipment detects the connection failure to when it reports an RLF report.
   - Time information on connection failure: the time information on connection failure may be used to indicate a time duration from when a terminal equipment last (or most recently) received a handover command (or a reconfiguration message) to when the terminal equipment detects the connection failure.
   - Information on failure cause: the information on failure cause is used to indicate at least one of the following failure causes: information on a type of an expired timer (e.g., a T312 timer expiries), a listen before talk (LBT) failure, an integrity check failure, handover to another system failure, reconfiguration with sync failure, an RRC connection reconfiguration failure, or other possible failure causes;
   - Conditional handover (CHO) configuration trigger information: the CHO configuration trigger information is used to indicate a CHO configuration executed by a terminal equipment, and a time duration during which the CHO configuration is received.
   - CHO cell information: the CHO cell information is used to indicate a cell where a terminal equipment successfully completes a CHO configuration; or
   - Handover type information: CHO or dual active protocol stack (DAPS) handover (DAPS HO);
220: the terminal equipment transmits RLF report available indicator information to an accessed network device (reception node), and the accessed network device may be called a receiving network device;
230: the terminal equipment receives an RLF report request transmitted by the receiving network device; and
240: the terminal equipment transmits an RLF report to the receiving network device.

Embodiments of the present disclosure are described below in conjunction with the drawings and specific implementations. For ease of description, the following text takes a base station as an example of an access network device for description. In the following descriptions, without causing confusion, "if...", "in a case where..." and "when..." may be used interchangeably.

It is understandable that in embodiments of the present disclosure, a terminal equipment and/or a network device may perform some or all of steps in embodiments of the present disclosure. These steps or operations are only examples, and embodiments of the present disclosure may further perform other operations or variations of various operations. In addition, steps may be performed in different orders presented in embodiments of the present disclosure, and it is possible that not all operations in embodiments of the present disclosure are performed.

### Embodiments of a First Aspect

Embodiments of the present disclosure provide a method for mobility management, which is described from a terminal equipment side.

FIG. 3 is a schematic diagram of the method for mobility management in embodiments of the present disclosure, as shown in FIG. 3, the method includes:
310: a terminal equipment receives configuration information for configuring an LTM candidate cell, transmitted by a first network device;
320: the terminal equipment determines that an LTM connection failure occurs; and
330: the terminal equipment records connection failure information, the connection failure information including at least one of the following: information for indicating a time duration from when the terminal equipment receives the configuration information for the last time to occurrence of the connection failure; or information for determining that a mobility type related to the connection failure is LTM.

It is worth noting that the above FIG. 3 only schematically describes embodiments of the present disclosure, however the present disclosure is not limited thereto. For example, some other operations may be added or certain operations therein may be reduced. Persons skilled in the art may make appropriate modifications according to the above contents, not being limited to records in the above FIG. 3.

According to embodiments of the present disclosure, a SON enhancement scheme in an LTM scenario is introduced, thereby a UE may report failure information related to LTM, so that a network device may perform corresponding parameter adjustments according to the failure information related to LTM, thus improving LTM robustness.

In operation 310, the configuration information of an LTM candidate cell may include cell information of an LTM candidate cell, thereby the first network device may configure an LTM candidate cell for the terminal equipment via configuration information of the LTM candidate cell.

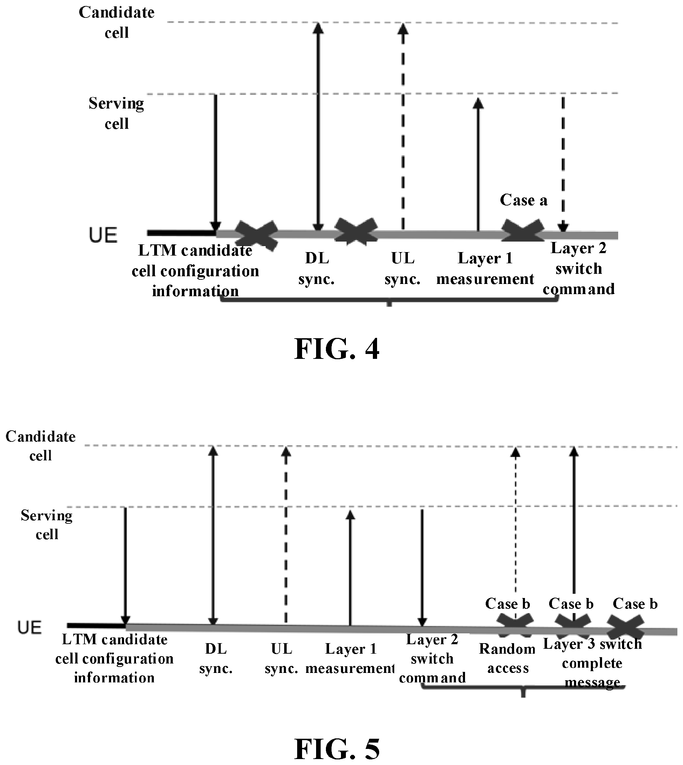

In operation 320, the terminal equipment may determine that a connection failure with a serving cell has occurred. Scenario in which the connection failure occurs may be at least one of the following:
scenario a, the connection failure (e.g., RLF) may occur at any point in time before the terminal equipment receives the configuration information of an LTM candidate cell and receives an LTM cell switch message (e.g., an LTM cell switch message transmitted by an L2 MAC CE), as shown in FIG. 4;
scenario b, the connection failure (e.g., HOF, or called an LTM failure, or called an LTM cell switch failure) may also occur during a cell switch procedure of a terminal equipment to an LTM target cell. For example, the terminal equipment receives an LTM cell switch message, the terminal equipment performs cell switch with the LTM target cell, the connection failure may occur before a random access (RA) procedure is successful, or before the terminal equipment successfully transmits the first uplink data of the terminal equipment, as shown in FIG. 5; and as a possible example, the first uplink data may be an L3 handover complete message, such as an RRC reconfiguration complete message; or
scenario c, the connection failure (e.g., RLF) may also occur at a point in time after the terminal equipment successfully completes LTM switch change to the LTM target cell. For example, the terminal equipment successfully transmits the first uplink data, or the terminal equipment determines that the network device has successfully received the first uplink data transmitted by the terminal equipment, for example, the terminal equipment receives data transmission scheduling information transmitted by the LTM target cell to the terminal equipment, as shown in FIG. 5.

In operation 330, after determining that the LTM connection failure occurs, the terminal equipment may record the connection failure information, and may generate a mobility report according to the connection failure information.

In embodiments of the present disclosure, as shown in FIG. 3, the method may further include:
340: the terminal equipment transmits a mobility report to a second network device, the mobility report including the connection failure information.

In the above embodiments, the second network device may be a network device accessed by the terminal equipment after the LTM connection failure, such as a reception node shown in FIG. 2. After the terminal equipment accesses a cell under the reception node, the reception node transmits a mobility report (e.g., an RLF report) request to the terminal equipment, and the terminal equipment transmits the mobility report to the reception node.

In the above embodiments, the terminal equipment transmits the mobility report to an accessed network device (called a second network device), so that a corresponding network device (called a third network device) may perform corresponding parameter adjustment according to the connection failure information, thereby improving LTM robustness.

It is understandable that the mobility report may include all or part of the connection failure information. The third network device may be at least one of the following network devices in an LTM procedure corresponding to the mobility report: a source network device, a target network device, or a network device to which the LTM candidate cell belongs. The source network device is a network device to which a previous serving cell belongs (e.g., a network device that transmits configuration information of an LTM candidate cell to the terminal equipment in scenario a, i.e., a network device to which a serving cell when a connection failure occurs (which may also be called a failed cell) belongs), or a network device to which a failed cell belongs (e.g., a network device that transmits an LTM cell switch message to the terminal equipment in scenario b), and the target network device is a network device to which the LTM target cell belongs.

As an example, when the connection failure in the mobility report occurs in the above scenario a or b, the third network device is a source network device; and when the connection failure in the mobility report occurs in the above scenario c, the third network device is a target network device, or is both a target network device and a source network device. It is understandable that in the above scenarios b or c, the first network device is a source network device. In the above scenario a, the first network device is a network device to which a failed cell in the mobility report belongs.

In the above example, the second network device and the third network device may be the same or may be different. When the third network device is different from the second network device, embodiments of the present disclosure may further include that: the second network device forwards the mobility report to the third network device.

In the above scenario c, if the third network device includes a target network device and a source network device, and the target network device is different from the source network device, embodiments of the present disclosure may further include that: the target network device transmits the mobility report to the source network device. Optionally, if in the above scenarios a, b, or c, the third network device further includes a network device to which the LTM candidate cell belongs, embodiments of the present disclosure may further include that: the source network device transmits the mobility report to the network device to which the LTM candidate cell belongs.

In some embodiments, the connection failure information includes information indicating a time duration from when the terminal equipment receives the configuration information of the LTM candidate cell for the last (i.e., the latest or most recent) time to occurrence of the connection failure. The information may also be called first time information. As an example, the first time information may be used by the third network device to optimize a transmission time of the configuration information of the LTM candidate cell and/or be used by the third network device to optimize a transmission time of the LTM cell switch message (e.g., an LTM cell switch command), thereby improving LTM robustness.

In some other embodiments, the connection failure information includes information for determining that a mobility type related to the connection failure is LTM. The information may also be called handover type information. As an example, the handover type information is used by the third network device to determine that the mobility type related to the connection failure of this time is LTM. For example, the handover type information may be LTM, thereby the mobility type related to the connection failure may be determined, thus subsequent processing may be performed, thereby improving LTM robustness.

In some other embodiments, the connection failure information includes information for indicating a time duration from when the terminal equipment reports L1 measurement result information to occurrence of the connection failure. The information may also be called second time information. As an example, the second time information may be used by the third network device to optimize a configuration for reporting the L1 measurement result information and/or be used by the third network device to optimize a transmission time of the LTM cell switch message (e.g., an LTM cell switch command), thereby improving LTM robustness.

In some other embodiments, the connection failure information includes information for indicating a time duration from when the terminal equipment receives the configuration information of the LTM candidate cell or receives configuration information of the LTM candidate cell for the last time to when the terminal equipment reports L1 measurement result information. The information may also be called third time information. As an example, the third time information may be used by the third network device to optimize a transmission time of the configuration information of the LTM candidate cell and/or be used by the network device to optimize a configuration for reporting the L1 measurement result information, thereby improving LTM robustness.

In some other embodiments, the connection failure information includes information for indicating downlink synchronization information of the terminal equipment and the LTM candidate cell. The information may also be called first downlink synchronization information. As a possible example, the first downlink synchronization information may be whether the terminal equipment and the LTM candidate cell complete downlink synchronization, and/or downlink synchronization time information of the terminal equipment and the LTM candidate cell. As an example, the first downlink synchronization information may be used by the third network device to optimize selection of the LTM candidate cell, thereby improving LTM robustness.

In some other embodiments, the connection failure information includes information for indicating uplink synchronization information of the terminal equipment and the LTM candidate cell. The information may also be called first uplink synchronization information. As a possible example, the first uplink synchronization information may be whether the terminal equipment and the LTM candidate cell complete uplink synchronization, for example, whether a random access procedure is initiated; optionally, the first uplink synchronization information may be information of the LTM candidate cell that completes uplink synchronization, or may be uplink synchronization completion indication information for indicating whether uplink synchronization with a certain LTM candidate cell is completed. As an example, the third network device may optimize selection of the LTM candidate cell, thereby improving LTM robustness.

In some other embodiments, the connection failure information includes information for indicating the LTM candidate cell in configuration information of the LTM candidate cell received by the terminal equipment for the last time or for indicating a latest LTM candidate cell stored by the terminal equipment. The information may be called cell information of an LTM candidate cell. As an example, the cell information of an LTM candidate cell may be used by the third network device to optimize configuration of the LTM candidate cell, thereby improving LTM robustness.

In some other embodiments, the connection failure information includes information for indicating latest L1 measurement result information or latest layer 1 (L1) measurement result information before the connection failure occurs, of the terminal equipment. The information may also be called L1 measurement result information, and the L1 measurement result information may include at least one of cell information, beam information, cell measurement result information, or L1 beam measurement result information. As an example, the L1 measurement result information may be used by the third network device to determine correspondence between the L1 measurement result information and the configuration information of the LTM candidate cell, thereby determining whether the configuration information of the LTM candidate cell needs to be optimized. Optionally, the connection failure information may include indication information for indicating whether a cell corresponding to the L1 measurement result information is an LTM candidate cell. The indication information is used to indicate, to the third network device, a relationship between cell information corresponding to the L1 measurement result and the LTM candidate cell, and is used by the third network device to determine whether the configuration information of the LTM candidate cell needs to be optimized.

As a possible example, the L1 measurement result information may include beam type information and/or corresponding beam measurement result information. The beam type information may be at least one of a channel state information reference signal (CSI-RS) or a synchronization signal block (SSB). The beam measurement result information includes at least one of the following: L1 Reference Signal Receiving Power (RSRP), L1 Reference Signal Receiving Quality (RSRQ), an L1 Reference Signal Strength Indicator (RSSI), an L1 Signal to Interference plus Noise Ratio (SINR), or other L1 signal quality information.

In some other embodiments, the connection failure information includes information for indicating the number of LTM candidate cells configured by the first network device and/or the number of reportable beams configured by the first network device. The information may also be called reporting configuration information of an L1 measurement result. As an example, the reporting configuration information of an L1 measurement result is used by the third network device to determine whether the number of LTM candidate cells and/or the number of beams configured by the first network device is appropriate, thus to optimize a configuration thereof, thereby improving LTM robustness.

In some other embodiments, the connection failure information includes information for indicating a random access configuration of the terminal equipment. The information may also be called random access configuration information of an LTM candidate cell, and may include random access configuration information for performing uplink synchronization with the LTM candidate cell before the LTM cell switch message (e.g., an LTM cell switch command) is received, and/or random access configuration information for performing cell switch with the LTM candidate cell after the LTM cell switch message is received. As an example, the information may be used by the third network device to optimize random access configuration of the LTM candidate cell, thereby improving performance of a random access procedure, and thus enhancing LTM robustness.

In some other embodiments, the connection failure information includes information for indicating latest layer 3 (L3) measurement result information or latest layer 3 (L3) measurement result information before the connection failure occurs, of the terminal equipment. The information may also be called L3 measurement result information. As an example, the L3 measurement result information is used by the third network device to determine whether the LTM candidate cell needs to be optimized according to the L3 measurement result.

In some other embodiments, the connection failure information includes information for indicating whether a cell in the L3 measurement result information is an LTM candidate cell. The information may also be called first indication information, and as an example, is used by the third network device to determine whether the LTM candidate cell needs to be optimized.

In some other embodiments, the connection failure information includes LTM target cell information. The LTM target cell information is used by the second network device to determine an LTM target cell where a connection failure occurs, thereby to determine a network device corresponding to the mobility report and forward the mobility report.

In some other embodiments, the connection failure information includes information for indicating a time duration from when the terminal equipment receives the LTM cell switch message (such as an LTM cell switch command) to when the terminal equipment receives the configuration information of the LTM target cell. The information may also be called fourth time information. As an example, the fourth time information is used by the third network device to optimize a transmission time of the LTM cell switch message and/or is used by the third network device to optimize a transmission time of the configuration information of the LTM target cell, thereby improving LTM robustness.

In some other embodiments, the connection failure information includes information for indicating a time duration from when the terminal equipment receives the configuration information of the LTM target cell to occurrence of the connection failure. The information may also be called fifth time information. As an example, the fifth time information is used by the third network device to optimize a transmission time of the configuration information of the LTM target cell and/or is used by the third network device to optimize a transmission time of the LTM cell switch message, thereby reducing storage resource consumption problems caused by resource reservation of a target network device and improving LTM robustness.

In some other embodiments, the connection failure information includes information for indicating a time duration from when the terminal equipment receives the LTM cell switch message (such as an LTM cell switch command) to occurrence of the connection failure. The information may also be called sixth time information. The sixth time information is used by the third network device to optimize a transmission time of the configuration information of the LTM candidate cell, thereby reducing a resource reservation time of a network device side to which the LTM candidate cell belongs and saving network storage space thereof.

In some other embodiments, the connection failure information includes information for indicating a time advance (TA) of the LTM target cell, received by the terminal equipment. The information may be called timing advance information. As an example, the timing advance information is used by the third network device to determine whether determination of the TA is reasonable, thereby optimizing a TA determination mechanism, improving reliability of TAs, and thus improving LTM robustness.

In some other embodiments, the connection failure information includes information for indicating a time duration from when the terminal equipment completes uplink synchronization with the LTM target cell to when the terminal equipment receives the time advance. The information may also be called seventh time information. As an example, the seventh time information is used by the third network device to optimize the TA determination mechanism, optimize a transmission time of the TA, improve reliability of the TA, thereby improving LTM robustness.

In some other embodiments, the connection failure information includes information for indicating a time duration from when the terminal equipment receives the time advance to when the terminal equipment initiates a random access procedure or transmits the first uplink data to the LTM target cell. This information may also be called eighth time information. As an example, the eighth time information is used by the third network device to determine validity of the time advance. As another example, if the connection failure is HOF, the eighth time information may be used by the third network device to determine whether the HOF is caused by TA expiry.

In some other embodiments, the connection failure information includes information for indicating a random access configuration of the terminal equipment. The information may also be called random access information of a terminal equipment and an LTM candidate cell. As an example, the information may include random access configuration information for performing uplink synchronization with the LTM candidate cell before the LTM cell switch message is received, and/or random access configuration information for performing cell switch with the LTM target cell after the LTM cell switch message is received.

In some other embodiments, the connection failure information includes information for indicating a configured grant (CG) configuration of the terminal equipment in the LTM target cell. The information may also be called CG configuration information of a terminal equipment in the LTM target cell, and as an example, is used to indicate a CG configuration for transmitting the first uplink data during LTM, configured for a terminal equipment in the LTM target cell. The information may include at least one of a CG period, an offset, a Hybrid Automatic Repeat-reQuest (HARQ) process ID, or an associated downlink reference signal.

Each of the above embodiments only exemplarily describes the connection failure information, however the present disclosure is not limited thereto, appropriate modifications may be further made based on each of the above embodiments. For example, each of the above embodiments may be used individually, that is, the connection failure information may only include one of the above pieces of information, or one or more of the above embodiments may be combined, that is, the connection failure information may further include any combination of the above pieces of information.

For example, in a scenario shown in FIG. 4, the connection failure may be a connection failure between the terminal equipment and the serving cell, such as the above scenario a. Correspondingly, the connection failure information may include any one or any combination of the first time information, the handover type information, the second time information, the third time information, the first downlink synchronization information, the first uplink synchronization information, the cell information of an LTM candidate cell, the L1 measurement result information, the reporting configuration information of an L1 measurement result, the random access configuration information of an LTM candidate cell, the L3 measurement result information, or the first indication information.

For another example, in a scenario shown in FIG. 5, the connection failure may be a connection failure between the terminal equipment and the LTM target cell, such as the above scenario b or the above scenario c. Correspondingly, the connection failure information may include any one or any combination of the first time information, the handover type information, the second time information, the third time information, the first downlink synchronization information, the first uplink synchronization information, the cell information of an LTM candidate cell, the L1 measurement result information, the reporting configuration information of an L1 measurement result, the random access configuration information of an LTM candidate cell, the L3 measurement result information, the first indication information, the LTM target cell information, the fourth time information, the fifth time information, the sixth time information, the timing advance information, the seventh time information, the eighth time information, the random access information of a terminal equipment and an LTM target cell, or the CG configuration information of a terminal equipment in an LTM target cell.

In embodiments of the present disclosure, when the terminal equipment detects the connection failure, the terminal device may attempt a re-establishment procedure. If a cell for which the terminal equipment attempts to perform re-establishment is an LTM candidate cell or a CHO candidate cell, the connection failure information may further include at least one of the following:
cell information for indicating that the terminal equipment attempts to perform LTM recovery or CHO recovery; or
information for indicating a recovery type to be prioritized for execution.

In the above embodiments, if the cell for which the terminal equipment attempts to perform re-establishment is an LTM candidate cell or a CHO candidate cell, the terminal equipment may successfully complete LTM recovery or CHO recovery, or a connection failure may occur again (i.e., a second connection failure), that is, consecutive connection failures (or called two connection failures) occur in the same LTM procedure, and the terminal equipment may further record at least one of the following in the mobility report:
information for indicating a time duration from when the terminal equipment receives the configuration information of the LTM candidate cell for the last time to occurrence of the second connection failure. It is understandable that the second connection failure is a connection failure between the terminal equipment and a cell for which the terminal equipment attempts to perform LTM recovery or CHO recovery; or
information for indicating a time duration from occurrence of the connection failure to occurrence of the second connection failure.

In the above embodiments, the cell information for indicating that the terminal equipment attempts to perform LTM recovery or CHO recovery may also be called cell information of attempting LTM recovery or attempting CHO recovery.

For example, if timer T311 is running and a cell for which the terminal equipment performs cell selection is an LTM candidate cell or a CHO candidate cell, the terminal equipment records the cell information of attempting LTM recovery or attempting CHO recovery; wherein a start condition for the timer T311 is that the terminal equipment initiates a re-establishment procedure.

In the above embodiments, information for indicating a time duration from when the terminal equipment receives the configuration information of the LTM candidate cell for the last time (or the latest time) to occurrence of the second connection failure may also be called ninth time information. As an example, the ninth time information is used by the third network device to optimize a transmission time of the configuration information of the LTM candidate cell and/or is used by the third network device to optimize a transmission time of the LTM cell switch message, thereby determining mobility parameters when the LTM connection failure occurs, thus optimizing corresponding mobility parameters, and improving LTM robustness.

In the above embodiments, information for indicating a time duration from occurrence of the connection failure to occurrence of the second connection failure may also be called tenth time information. As an example, the tenth time information is used by the third network device to determine mobility parameters when the LTM connection failure occurs, thereby to optimize corresponding mobility parameters, thus improving LTM robustness.

In the above embodiments, information for indicating a recovery type to be prioritized for execution may also be called priority indication information. If a cell for which the terminal equipment attempts to perform re-establishment is both an LTM candidate cell and a CHO candidate cell, the priority indication information may be used to indicate to the third network device (for example, the third network device and the first network device are the same network device) a recovery type to be prioritized for execution, configured for the terminal equipment, for example the third network device may configure the terminal equipment to perform LTM recovery preferably or to perform CHO recovery preferably.

In some embodiments, in a scenario shown in FIG. 4, if a cell for which the terminal equipment attempts to perform re-establishment is an LTM candidate cell or a CHO candidate cell, the connection failure information may further include at least one of the cell information of attempting LTM recovery or attempting CHO recovery, the ninth time information, the tenth time information, or the priority indication information.

In some other embodiments, in a scenario shown in FIG. 5, if a cell for which the terminal equipment attempts to perform re-establishment is an LTM candidate cell or a CHO candidate cell, the connection failure information may further include at least one of the cell information of attempting LTM recovery or attempting CHO recovery, the ninth time information, or the tenth time information.

A method in embodiments of the present disclosure is described below by taking scenarios shown in FIG. 4 and FIG. 5 as examples, respectively.

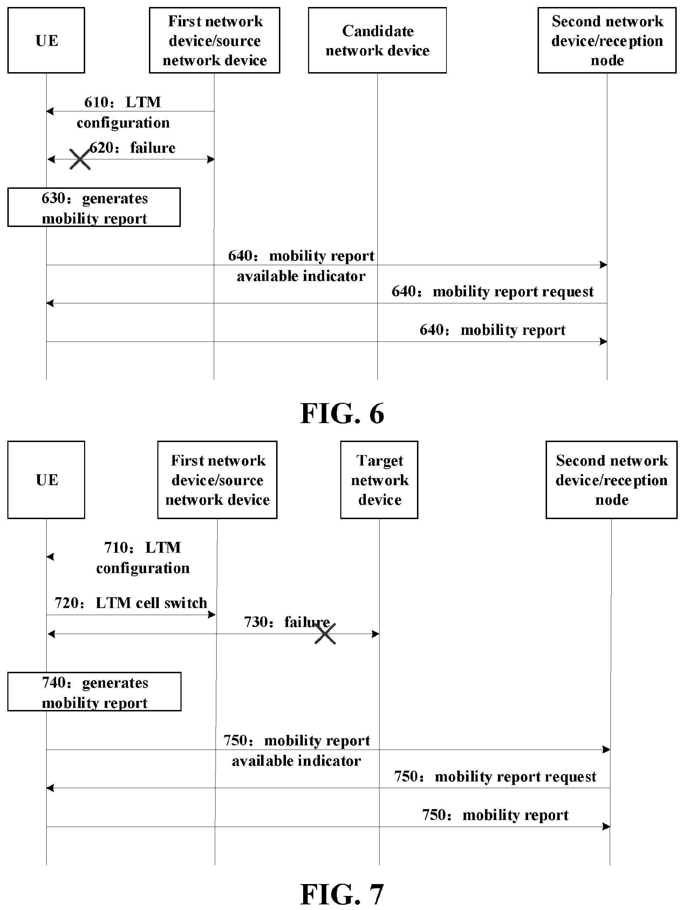

FIG. 6 is a schematic diagram of an information interaction process between a terminal equipment and a network device in a scenario shown in FIG. 4. In an example of FIG. 6, the first network device is a source base station (SgNB), and the second network device is a reception node. As shown in FIG. 6, the process includes:
610: the terminal equipment receives configuration information of an LTM candidate cell, transmitted by the first network device (source base station);
620: the terminal equipment determines that a connection failure with a serving cell occurs;
630: the terminal equipment records connection failure information to a mobility report; and
640: the terminal equipment transmits the mobility report to the second network device (reception node).

In operation 610, the configuration information of the LTM candidate cell may include cell information of a candidate cell. For description of the cell information, descriptions in other embodiments of the present disclosure may be referred to, and details will not be repeated here.

In operation 620, the connection failure includes a radio link failure (RLF), a handover failure (HOF), or connection failures caused by timer expiry or other reasons. In addition, the connection failure is a connection failure between the terminal equipment and the serving cell, and occurs in a scenario shown in FIG. 4, such as the above scenario a.

In operation 630, when the terminal equipment detects that the connection failure with a current serving cell occurs, the terminal equipment needs to record corresponding connection failure information. For example, the terminal equipment may record a mobility report related to the connection failure. For description of the mobility report, descriptions in each of the embodiments of the present disclosure may be referred to, and details will not be repeated here.

In the above examples, as described above, the terminal equipment may record the following connection failure information in the mobility report: any one or any combination of the first time information, the handover type information, the second time information, the third time information, the first downlink synchronization information, the first uplink synchronization information, the cell information of an LTM candidate cell, the L1 measurement result information, the reporting configuration information of an L1 measurement result, the random access configuration information of an LTM candidate cell, the L3 measurement result information, or the first indication information.

In the above examples, as described above, if the cell for which the terminal equipment attempts to perform re-establishment is an LTM candidate cell or a CHO candidate cell, the terminal equipment may record the following connection failure information in the mobility report: at least one of cell information of attempting LTM recovery or attempting CHO recovery, ninth time information, tenth time information, or priority indication information.

In operation 640, the terminal equipment may transmit the mobility report to the second network device. The present disclosure does not impose limitations on a specific transmission method, an adopted link, or the like. Relevant contents regarding the second network device have been described above, and will not be repeated here.

FIG. 7 is a schematic diagram of an information interaction process between a terminal equipment and a network device in a scenario shown in FIG. 5. In an example of FIG. 7, the first network device is a source base station (SgNB), and the second network device is a reception node. As shown in FIG. 7, the process includes:
710: the terminal equipment receives configuration information of an LTM candidate cell, transmitted by the first network device (source base station);
720: the terminal equipment receives a first switch message, the first switch message being used to indicate the terminal equipment to perform LTM cell switch to an LTM target cell;
730: the terminal equipment determines that a connection failure with the LTM target cell occurs;
740: the terminal equipment records connection failure information to a mobility report; and
750: the terminal equipment transmits the mobility report to the second network device (reception node).

In operation 710, the configuration information of the LTM candidate cell may include cell information of a candidate cell. Specific contents regarding the cell information have been described above, and will not be repeated here.

In operation 720, the first switch message e.g. is an LTM cell switch command, however the present disclosure is not limited thereto, the first switch message may further have other names.

In operation 730, the connection failure includes a radio link failure (RLF), a handover failure (HOF), or connection failures caused by timer expiry or other reasons. In addition, the connection failure is a connection failure between the terminal equipment and the LTM target cell, and occurs in a scenario shown in FIG. 5, such as the above scenario b or the above scenario c. It is understandable that a network device to which the LTM target cell belongs may be called an LTM target network device.

In operation 740, when the terminal equipment detects that the connection failure with the LTM target cell occurs, the terminal equipment needs to record corresponding connection failure information to a mobility report. Relevant contents about the mobility report have been described above, and will not be repeated here.

In the above examples, the connection failure information e.g., may include any one or any combination of the first time information, the handover type information, the second time information, the third time information, the first downlink synchronization information, the first uplink synchronization information, the cell information of an LTM candidate cell, the L1 measurement result information, the reporting configuration information of an L1 measurement result, the random access configuration information of an LTM candidate cell, the L3 measurement result information, the first indication information, the LTM target cell information, the fourth time information, the fifth time information, the sixth time information, the timing advance information, the seventh time information, the eighth time information, the random access information of the terminal equipment and the LTM target cell, or the CG configuration information of the terminal equipment in the LTM target cell.

In the above examples, as described above, if the cell for which the terminal equipment attempts to perform re-establishment is an LTM candidate cell or a CHO candidate cell, the terminal equipment may successfully complete LTM recovery or CHO recovery, or a connection failure may occur again, that is, consecutive failures occur in the same LTM procedure. The terminal equipment may record the following connection failure information in the mobility report: at least one of the cell information of attempting LTM recovery or attempting CHO recovery, the ninth time information, or the tenth time information.

In operation 750, the terminal equipment may transmit the mobility report to the second network device. The present disclosure does not impose limitations on a specific transmission method, an adopted link, or the like. Relevant contents regarding the second network device have been described above, and will not be repeated here.

The above text provides an exemplary description of embodiments of the present disclosure, but the present disclosure is not limited thereto, appropriate variation(s) may be further made based on each of the above embodiments. For example, each of the above embodiments may be used individually, or one or more of the above embodiments may be combined.

According to methods in embodiments of the present disclosure, a SON enhancement scheme in an LTM scenario is introduced, thereby a terminal equipment may report connection failure information related to LTM, so that a network device may perform corresponding parameter adjustments according to the connection failure information, thus improving LTM robustness.

### Embodiments of a Second Aspect

Embodiments of the present disclosure provide a method for mobility management, which is described from a second network device side. Contents same as those in embodiments of the first aspect are not repeated again.

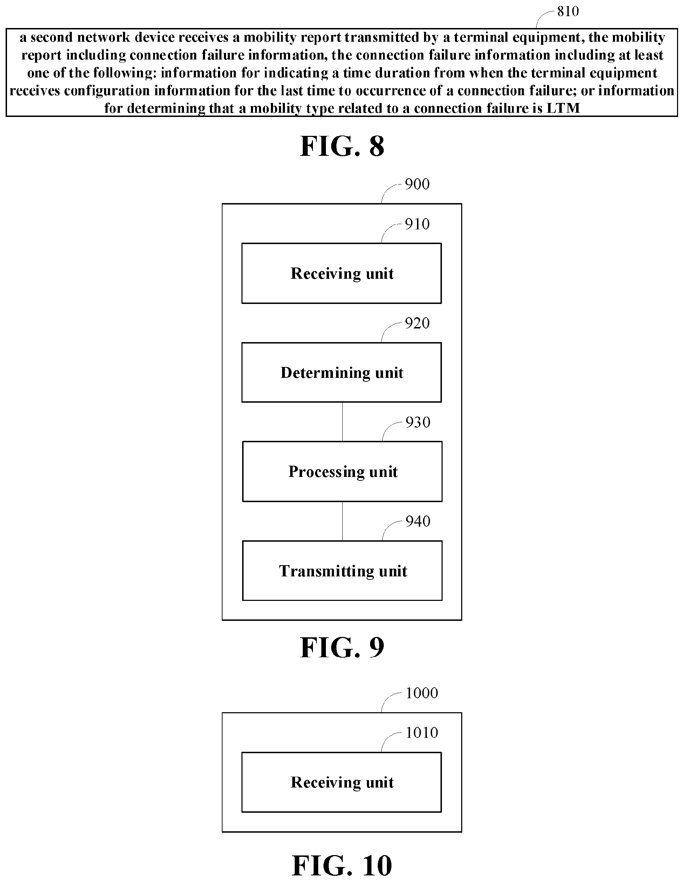

FIG. 8 is a schematic diagram of the method for mobility management in embodiments of the present disclosure, as shown in FIG. 8, the method includes:
810: a second network device receives a mobility report transmitted by a terminal equipment, the mobility report including connection failure information, the connection failure information including at least one of the following: information for indicating a time duration from when the terminal equipment receives configuration information for the last time to occurrence of a connection failure; or information for determining that a mobility type related to a connection failure is LTM.

Relevant contents regarding the connection failure information have been described in embodiments of the first aspect, are incorporated here, and are not repeated here.

The above text provides an exemplary description of embodiments of the present disclosure, but the present disclosure is not limited thereto, appropriate variation(s) may be further made based on each of the above embodiments. For example, each of the above embodiments may be used individually, or one or more of the above embodiments may be combined.

According to methods in embodiments of the present disclosure, a SON enhancement scheme in an LTM scenario is introduced, thereby a terminal equipment may report connection failure information related to LTM, so that a network device may perform corresponding parameter adjustments according to the connection failure information, thus improving LTM robustness.

### Embodiments of a Third Aspect

### Embodiments of the present disclosure provide an apparatus for mobility management.

FIG. 9 is a schematic diagram of the apparatus for mobility management in embodiments of the present disclosure. The apparatus may be e.g. a terminal equipment, or may be one or more parts or components configured in a terminal equipment. A principle of the apparatus to solve problems is same as a method in embodiments of the first aspect, thus a specific implementation thereof may refer to implementation of a method in embodiments of the first aspect, the same contents will not be repeated.

As shown in FIG. 9, the apparatus 900 includes:
a receiving unit 910 configured to receive configuration information for configuring an L1/L2 triggered mobility (LTM) candidate cell, transmitted by a first network device;
a determining unit 920 configured to determine that an LTM connection failure occurs; and
a processing unit 930 configured to record connection failure information, the connection failure information including at least one of the following:
   information for indicating a time duration from when the terminal equipment receives the configuration information for the last time to occurrence of the connection failure; or
   information for determining that a mobility type related to the connection failure is LTM.

In some embodiments, the connection failure information may further include at least one of the following:
information for indicating a time duration from when the terminal equipment reports L1 measurement result information to occurrence of the connection failure;
information for indicating a time duration from when the terminal equipment receives the configuration information or receives the configuration information for the last time to when the terminal equipment reports L1 measurement result information;
information for indicating downlink synchronization information of the terminal equipment and the LTM candidate cell;
information for indicating uplink synchronization information of the terminal equipment and the LTM candidate cell;
information for indicating an LTM candidate cell in the configuration information received by the terminal equipment for the last time or for indicating a latest LTM candidate cell stored by the terminal equipment;
information for indicating latest L1 measurement result information or latest L1 measurement result information before the connection failure occurs, of the terminal equipment;
information for indicating the number of LTM candidate cells and/or the number of reference signals, configured by the first network device;
information for indicating a random access configuration of the terminal equipment;
information for indicating latest L3 measurement result information or latest L3 measurement result information before the connection failure occurs, of the terminal equipment; or
information for indicating whether a cell in L3 measurement result information is the LTM candidate cell.

In some embodiments, the connection failure is a failure of connection between the terminal equipment and an LTM target cell, and the connection failure information further includes at least one of the following:
LTM target cell information;
information for indicating a time duration from when the terminal equipment receives an LTM cell switch message to when the terminal equipment receives configuration information of an LTM target cell;
information for indicating a time duration from when the terminal equipment receives configuration information of an LTM target cell to occurrence of the connection failure;
information for indicating a time duration from when the terminal equipment receives an LTM cell switch message to occurrence of the connection failure;
information for indicating a time advance of an LTM target cell, received by the terminal equipment;
information for indicating a time duration from when the terminal equipment completes uplink synchronization with an LTM target cell to when the terminal equipment receives a time advance;
information for indicating a time duration from when the terminal equipment receives a time advance to when the terminal equipment initiates a random access procedure or transmits the first uplink data to an LTM target cell;
information for indicating a random access configuration of the terminal equipment; or
information for indicating a CG configuration of the terminal equipment in an LTM target cell.

In the above embodiments, the information for indicating a random access configuration of the terminal equipment may include at least one of the following:
random access configuration information for performing uplink synchronization with an LTM candidate cell before an LTM cell switch message is received; or
random access configuration information for performing cell switch with an LTM target cell after an LTM cell switch message is received.

In some embodiments, a cell for which the terminal equipment attempts to perform re-establishment is an LTM candidate cell or a conditional handover (CHO) candidate cell, and the connection failure information further includes at least one of the following:
cell information for indicating that the terminal equipment attempts to perform LTM recovery or CHO recovery;
information for indicating a time duration from when the terminal equipment receives the configuration information for the last time to occurrence of a second connection failure;
information for indicating a time duration from occurrence of the connection failure to occurrence of a second connection failure; or
information for indicating a recovery type to be prioritized for execution.

In some embodiments, as shown in FIG. 9, the apparatus 900 further includes:
a transmitting unit 940 configured to transmit a mobility report to a second network device, the mobility report including the connection failure information.

FIG. 10 is another schematic diagram of the apparatus for mobility management in embodiments of the present disclosure. The apparatus may be a network device, or may be one or more parts or components configured in a network device. Principle of the apparatus to solve a problem is same as that of a method in embodiments of the second aspect, thus for its specific implementation, implementation of a method in embodiments of the second aspect may be referred to, same contents are not repeated.

As shown in FIG. 10, the apparatus 1000 includes:
a receiving unit 1010 configured to receive a mobility report transmitted by a terminal equipment, the mobility report including connection failure information, the connection failure information including at least one of the following:
information for indicating a time duration from when the terminal equipment receives the configuration information for the last time to occurrence of the connection failure; or
information for determining that a mobility type related to the connection failure is LTM.

In some embodiments, the connection failure information may further include at least one of the following:
information for indicating a time duration from when the terminal equipment reports L1 measurement result information to occurrence of the connection failure;
information for indicating a time duration from when the terminal equipment receives the configuration information or receives the configuration information for the last time to when the terminal equipment reports L1 measurement result information;
information for indicating downlink synchronization information of the terminal equipment and the LTM candidate cell;
information for indicating uplink synchronization information of the terminal equipment and the LTM candidate cell;
information for indicating an LTM candidate cell in the configuration information received by the terminal equipment for the last time or for indicating a latest LTM candidate cell stored by the terminal equipment;
information for indicating latest L1 measurement result information or latest L1 measurement result information before the connection failure occurs, of the terminal equipment;
information for indicating the number of LTM candidate cells and/or the number of reference signals, configured by the first network device;
information for indicating random access configuration of the terminal equipment;
information for indicating latest L3 measurement result information or latest L3 measurement result information before the connection failure occurs, of the terminal equipment; or
information for indicating whether a cell in L3 measurement result information is the LTM candidate cell.

In some embodiments, the connection failure is a failure of connection between the terminal equipment and an LTM target cell, and the connection failure information further includes at least one of the following:
LTM target cell information;
information for indicating a time duration from when the terminal equipment receives an LTM cell switch message to when the terminal equipment receives configuration information of an LTM target cell;
information for indicating a time duration from when the terminal equipment receives configuration information of an LTM target cell to occurrence of the connection failure;
information for indicating a time duration from when the terminal equipment receives an LTM cell switch message to occurrence of the connection failure;
information for indicating a time advance of an LTM target cell, received by the terminal equipment;
information for indicating a time duration from when the terminal equipment completes uplink synchronization with an LTM target cell to when the terminal equipment receives a time advance;
information for indicating a time duration from when the terminal equipment receives a time advance to when the terminal equipment initiates a random access procedure or transmits the first uplink data to an LTM target cell;
information for indicating a random access configuration of the terminal equipment; or
information for indicating a CG configuration of the terminal equipment in an LTM target cell.

In the above embodiments, the information for indicating a random access configuration of the terminal equipment may include at least one of the following:
random access configuration information for performing uplink synchronization with an LTM candidate cell before an LTM cell switch message is received; or
random access configuration information for performing cell switch with an LTM target cell after an LTM cell switch message is received.

In some embodiments, a cell for which the terminal equipment attempts to perform re-establishment is an LTM candidate cell or a conditional handover (CHO) candidate cell, and the connection failure information further includes at least one of the following:
cell information for indicating that the terminal equipment attempts to perform LTM recovery or CHO recovery;
information for indicating a time duration from when the terminal equipment receives the configuration information for the last time to occurrence of a second connection failure;
information for indicating a time duration from occurrence of the connection failure to occurrence of a second connection failure; or
information for indicating a recovery type to be prioritized for execution.

The above text provides an exemplary description of embodiments of the present disclosure, but the present disclosure is not limited thereto, appropriate variation(s) may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The above apparatuses may further include other components or modules. For detailed contents of these components or modules, relevant technologies may be referred to. Moreover, each of the above components or modules may be implemented via a hardware facility such as a processor, a memory, a transmitter, a receiver, etc. Embodiments of the present disclosure have no limitation thereto.

According to apparatuses in embodiments of the present disclosure, a SON enhancement scheme in an LTM scenario is introduced, thereby a terminal equipment may report connection failure information related to LTM, so that a network device may perform corresponding parameter adjustments according to the connection failure information, thus improving LTM robustness.

### Embodiments of a Fourth Aspect

Embodiments of the present disclosure further provide a communication system, including a network device and a terminal equipment.

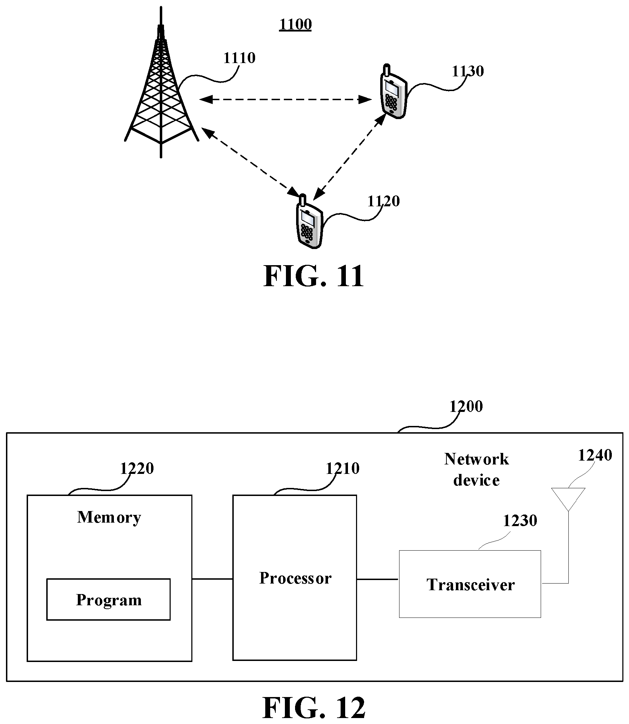

FIG. 11 is a schematic diagram of the communication system in embodiments of the present disclosure, schematically describing a situation by taking a terminal equipment and a network device as an example, and as shown in FIG. 11, the communication system 1100 may include a network device 1110 and terminal equipments 1120, 1130. For simplicity, FIG. 11 only takes two terminal equipments and one network device as an example for description, however embodiments of the present disclosure are not limited thereto.

In embodiments of the present disclosure, transmission of existing services or future implementable services may be performed between the network device 1110 and the terminal equipments 1120, 1130. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 11 shows that two terminal equipments 1120 and 1130 are within a coverage range of the network device 1110, however the present disclosure is not limited thereto. The two terminal equipments 1120 and 1130 may be not within a coverage range of the network device 1110, or one terminal equipment 1120 is within the coverage range of the network device 1110 while the other terminal equipment 1130 is outside the coverage range of the network device 1110.

In some embodiments, the network device includes the apparatus 1000 in embodiments of the third aspect, configured to perform the method in embodiments of the second aspect. Since the method has been described in details in embodiments of the second aspect, contents thereof are incorporated here and are not repeated.

The network device may be a gNB under an intra-DU mobility scenario, including a gNB-DU and a gNB-CU, or a gNB under an inter-DU mobility scenario, including a source gNB-DU, a candidate or target gNB-DU and a gNB-CU, and performs the method in the embodiments of the second aspect.

In some embodiments, the terminal equipment includes the apparatus 900 in embodiments of the third aspect, configured to perform the method in embodiments of the first aspect. Since the method has been described in details in embodiments of the first aspect, contents thereof are incorporated here and are not repeated.

The terminal equipment may be a UE under an intra-DU mobility scenario or an inter-DU mobility scenario, and performs the method in embodiment of the first aspect.

Embodiments of the present disclosure further provide a network device, the network device for example may be a base station, such as a gNB under an intra-DU mobility scenario or a gNB under an inter-DU mobility scenario, however the present disclosure is not limited thereto, the network device may further be other network device.

FIG. 12 is a composition schematic diagram of the network device in embodiments of the present disclosure. As shown in FIG. 12, the network device 1200 may include: a processor 1210, and a memory 1220 coupled to the processor 1210. The memory 1220 may store various data; moreover, further stores a program for information processing, and executes the program under control of the processor 1210.

In some embodiments, functions of the apparatus 1000 in embodiments of the third aspect may be integrated into the processor 1210, wherein the processor 1210 may be configured to execute a program to implement the method described in embodiments of the first aspect, contents thereof are incorporated here and are not repeated here.

In some other embodiments, the apparatus 1000 in embodiments of the third aspect may be configured separately from the processor 1210, for example the apparatus 1000 in embodiments of the third aspect may be configured as a chip connected to the processor 1210, and functions of the apparatus 1000 in embodiments of the third aspect are implemented through control of the processor 1210.

In addition, as shown in FIG. 12, the network device 1200 may further include: transceivers 1230 and 1240. Functions of the above components are similar to related arts, and are not further elaborated here. It is worth noting that the network device 1200 does not have to include all components shown in FIG. 12. Moreover, the network device 1200 may further include components not shown in FIG. 12, related arts may be referred to.

Embodiments of the present disclosure further provide a terminal equipment, the terminal equipment for example may be a UE, such as a UE under an intra-DU mobility scenario or a UE under an inter-DU mobility scenario, however the present disclosure is not limited thereto, the terminal equipment may further be other terminal equipment.

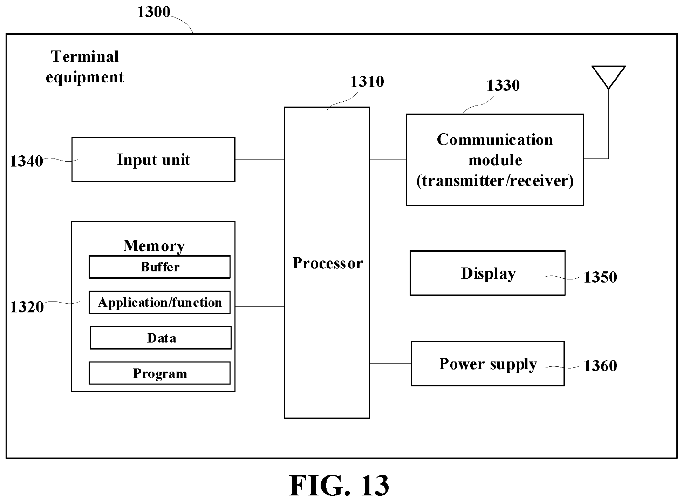

FIG. 13 is a schematic diagram of a terminal equipment in embodiments of the present disclosure. As shown in FIG. 13, the terminal equipment 1300 may include a processor 1310 and a memory 1320; the memory 1320 stores data and programs, and is coupled to the processor 1310. It is worth noting that this figure is exemplary, other types of structures may further be used to supplement or replace this structure, so as to implement a telecommunication function or other functions.

In some embodiments, functions of the apparatus 900 in embodiments of the third aspect may be integrated into the processor 1310, wherein the processor 1310 may be configured to execute a program to implement the method described in embodiments of the second aspect, contents thereof are incorporated here and are not described repeatedly here.

In some other embodiments, the apparatus 900 in embodiments of the third aspect may be configured separately from the processor 1310, for example the apparatus 900 in embodiments of the third aspect may be configured as a chip connected to the processor 1310, and functions of the apparatus 900 in embodiments of the third aspect are implemented through control of the processor 1310.

As shown in FIG. 13, the terminal equipment 1300 may further include: a communication module 1330, an input unit 1340, a display 1350, and a power supply 1360. Functions of the above components are similar to related arts, and are not further elaborated here. It is worth noting that the terminal equipment 1300 does not have to include all components shown in FIG. 13, the above components are not indispensable. Moreover, the terminal equipment 1300 may further include components not shown in FIG. 13, and relevant technologies may be referred to.

Embodiments of the present disclosure further provide a computer program, wherein when the program is executed in a network device, the program enables the network device to execute the method described in embodiments of the second aspect.

Embodiments of the present disclosure further provide a storage medium in which a computer program is stored, wherein the computer program enables a network device to execute the method described in embodiments of the second aspect.

Embodiments of the present disclosure further provide a computer program, wherein when the program is executed in a terminal equipment, the program enables the terminal equipment to execute the method described in embodiments of the first aspect.

Embodiments of the present disclosure further provide a storage medium in which a computer program is stored, wherein the computer program enables a terminal equipment to execute the method described in embodiments of the first aspect.

Apparatuses and methods in the present disclosure may be implemented by hardware, or may be implemented by combining hardware with software. The present disclosure relates to such a computer readable program that when the program is executed by a logic component, the logic component is able to implement the apparatuses described in the above text or a constituent component, or the logic component is able to implement various methods or steps described in the above text. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Persons skilled in the art may make various variations and amendments to the present disclosure according to spirits and principles of the present disclosure, these variations and amendments are also within scopes of the present disclosure.

## Claims

1. An apparatus for mobility management, configured in a terminal equipment, wherein the apparatus comprises:
a receiving unit configured to receive configuration information for configuring an L1/L2 triggered mobility (LTM) candidate cell, transmitted by a first network device;
a determining unit configured to determine that an LTM connection failure occurs; and
a processing unit configured to record connection failure information, the connection failure information comprising at least one of the following:
information for indicating a time duration from when the terminal equipment receives the configuration information for the last time to occurrence of the connection failure; or
information for determining that a mobility type related to the connection failure is LTM.

2. The apparatus according to claim 1, wherein the connection failure information further comprises at least one of the following:
information for indicating a time duration from when the terminal equipment reports layer 1 (L1) measurement result information to occurrence of the connection failure;
information for indicating a time duration from when the terminal equipment receives the configuration information or receives the configuration information for the last time to when the terminal equipment reports L1 measurement result information;
information for indicating downlink synchronization information of the terminal equipment and the LTM candidate cell;
information for indicating uplink synchronization information of the terminal equipment and the LTM candidate cell;
information for indicating an LTM candidate cell in the configuration information received by the terminal equipment for the last time or for indicating a latest LTM candidate cell stored by the terminal equipment;
information for indicating latest L1 measurement result information or latest L1 measurement result information before the connection failure occurs, of the terminal equipment;
indication information for indicating whether a cell corresponding to the L1 measurement result information is an LTM candidate cell;
information for indicating the number of LTM candidate cells and/or the number of reference signals, configured by the first network device;
information for indicating a random access configuration of the terminal equipment;
information for indicating latest L3 measurement result information or latest L3 measurement result information before the connection failure occurs, of the terminal equipment; or
information for indicating whether a cell in layer 3 (L3) measurement result information is the LTM candidate cell.

3. The apparatus according to claim 2, wherein the connection failure is a failure of connection between the terminal equipment and an LTM target cell, and the connection failure information further comprises at least one of the following:
LTM target cell information;
information for indicating a time duration from when the terminal equipment receives an LTM cell switch message to when the terminal equipment receives configuration information of an LTM target cell;
information for indicating a time duration from when the terminal equipment receives configuration information of an LTM target cell to occurrence of the connection failure;
information for indicating a time duration from when the terminal equipment receives an LTM cell switch message to occurrence of the connection failure;
information for indicating a time advance of an LTM target cell, received by the terminal equipment;
information for indicating a time duration from when the terminal equipment completes uplink synchronization with an LTM target cell to when the terminal equipment receives a time advance;
information for indicating a time duration from when the terminal equipment receives a time advance to when the terminal equipment initiates a random access procedure or transmits the first uplink data to an LTM target cell;
information for indicating a random access configuration of the terminal equipment; or
information for indicating a configuration grant (CG) configuration of the terminal equipment in an LTM target cell.

4. The apparatus according to claim 2, wherein information for indicating a random access configuration of the terminal equipment comprises at least one of the following:
random access configuration information for performing uplink synchronization with an LTM candidate cell before an LTM cell switch message is received; or
random access configuration information for performing cell switch with an LTM target cell after an LTM cell switch message is received.

5. The apparatus according to claim 1, wherein a cell for which the terminal equipment attempts to perform re-establishment is an LTM candidate cell or a conditional handover (CHO) candidate cell, and the connection failure information further comprises at least one of the following:
cell information for indicating that the terminal equipment attempts to perform LTM recovery or CHO recovery;
information for indicating a time duration from when the terminal equipment receives the configuration information for the last time to occurrence of a second connection failure;
information for indicating a time duration from occurrence of the connection failure to occurrence of a second connection failure; or
information for indicating a recovery type to be prioritized for execution.

6. The apparatus according to claim 1, wherein the apparatus further comprises that:
the terminal equipment transmits a mobility report to a second network device, the mobility report comprising the connection failure information.

7. An apparatus for mobility management, configured in a network device, wherein the apparatus comprises:
a receiving unit configured to receive a mobility report transmitted by a terminal equipment, the mobility report comprising connection failure information, the connection failure information comprising at least one of the following:
information for indicating a time duration from when the terminal equipment receives the configuration information for the last time to occurrence of the connection failure; or
information for determining that a mobility type related to the connection failure is LTM.

8. The apparatus according to claim 7, wherein the connection failure information further comprises at least one of the following:
information for indicating a time duration from when the terminal equipment reports L1 measurement result information to occurrence of the connection failure;
information for indicating a time duration from when the terminal equipment receives the configuration information or receives the configuration information for the last time to when the terminal equipment reports L1 measurement result information;
information for indicating downlink synchronization information of the terminal equipment and the LTM candidate cell;
information for indicating uplink synchronization information of the terminal equipment and the LTM candidate cell;
information for indicating an LTM candidate cell in the configuration information received by the terminal equipment for the last time or for indicating a latest LTM candidate cell stored by the terminal equipment;
information for indicating latest L1 measurement result information or latest L1 measurement result information before the connection failure occurs, of the terminal equipment;
indication information for indicating whether a cell corresponding to the L1 measurement result information is an LTM candidate cell;
information for indicating the number of LTM candidate cells and/or the number of reference signals, configured by the first network device;
information for indicating a random access configuration of the terminal equipment;
information for indicating latest Layer 3 (L3) measurement result information or latest L3 measurement result information before the connection failure occurs, of the terminal equipment; or
information for indicating whether a cell in L3 measurement result information is the LTM candidate cell.

9. The apparatus according to claim 8, wherein the connection failure is a failure of connection between the terminal equipment and an LTM target cell, and the connection failure information further comprises at least one of the following:
LTM target cell information;
information for indicating a time duration from when the terminal equipment receives an LTM cell switch message to when the terminal equipment receives configuration information of an LTM target cell;
information for indicating a time duration from when the terminal equipment receives configuration information of an LTM target cell to occurrence of the connection failure;
information for indicating a time duration from when the terminal equipment receives an LTM cell switch message to occurrence of the connection failure;
information for indicating a time advance of an LTM target cell, received by the terminal equipment;
information for indicating a time duration from when the terminal equipment completes uplink synchronization with an LTM target cell to when the terminal equipment receives a time advance;
information for indicating a time duration from when the terminal equipment receives a time advance to when the terminal equipment initiates a random access procedure or transmits the first uplink data to an LTM target cell;
information for indicating a random access configuration of the terminal equipment; or
information for indicating a CG configuration of the terminal equipment in an LTM target cell.

10. The apparatus according to claim 8, wherein the information for indicating a random access configuration of the terminal equipment comprises at least one of the following:
random access configuration information for performing uplink synchronization with an LTM candidate cell before an LTM cell switch message is received; or
random access configuration information for performing cell switch with an LTM target cell after an LTM cell switch message is received.

11. The apparatus according to claim 7, wherein a cell for which the terminal equipment attempts to perform re-establishment is an LTM candidate cell or a CHO candidate cell, and the connection failure information further comprises at least one of the following:
cell information for indicating that the terminal equipment attempts to perform LTM recovery or CHO recovery;
information for indicating a time duration from when the terminal equipment receives the configuration information for the last time to occurrence of a second connection failure;
information for indicating a time duration from occurrence of the connection failure to occurrence of a second connection failure; or
information for indicating a recovery type to be prioritized for execution.

12. A terminal equipment, comprising a memory and a processor, the memory being configured to store a computer program, and the processor being configured to execute the computer program to implement the following method:
receiving configuration information for configuring an LTM candidate cell, transmitted by a first network device;
determining that an LTM connection failure occurs; and
recording connection failure information, the connection failure information comprising at least one of the following:
information for indicating a time duration from when the terminal equipment receives the configuration information for the last time to occurrence of the connection failure; or
information for determining that a mobility type related to the connection failure is LTM.
